# EUROPEAN PATENT APPLICATION

(11) **EP 1 488 959 A1**
(43) Date of publication of application: **22.12.2004**
(21) Application number: 04013332.4
(22) Date of filing: 05.06.2004
(51) Int. Cl.: B60R 19/18, B60R 19/36

(54) **Bumper for a vehicle**

(30) Priority: 16.06.2003 IT MI20031212
(71) Applicant: RECO s.r.l., 23870 Cernusco Lombardone (LC) (IT)
(72) Inventor: Redaelli, Guido, 23870 Cernusco Lombardone (LC) (IT)
(74) Representative: Ferraiolo, Ruggero

(57) **Abstract**

The bumper shows a cross outline C shaped comprising the two flanges (2) of the C shape, conveniently spaced one from the other and mountable horizontally along the rear part of a vehicle and comprising a web (3) which connects said two flanges; so, the bumper is defined by at least three individual elements connected together: two opposite flanges (2) of the C outline and a web (3) connecting said flanges, the web bearing at the upper and lower ends bent extensions (3a) suitable to lean against said flanges (Fig. 1).

## Description

This present invention refers to a bumper for an industrial or commercial vehicle and its trailer.

The field of the invention is the one of bumpers applied horizontally on the rear end of vehicles and their possible trailers, at the prescribed distance from the ground, these bumpers very frequently offering in their vertical extension room for warning rear lights that are protected generallyvby an adapted protection grating.

For sake of a simple wording, reference will be made in the following description to vehicles only and not to industrial or commercial vehicles and their trailer.

The bumpers shall comply with specific requirements in order to get approval from responsible authorities, almost in all countries.

Several types of bumpers are on the market, the more known of which being:
- bumper barrs made from formed steel plate by bending or pressing, substantially with cross outline C shaped with bent flanges;
- bumper barrs of hollow cross section, round, square, rectangular or poligonal, of steel or drawn aluminium;
- bumper barrs of drawn aluminium substantially C shaped with closed outline.

The main drawbacks in the known bumpers are:
- in the two first cited types, the notable weight and corrosion problems in the drilled or worked steel surfaces, unless the barrs are of stainless steel or aluminium, in the case of stainless steel the high cost being the drawback; another disadvantage is that said barrs are commercial products requiring specific engineering for drilling the passages for light wires, for the connection with the vehicle and possible application of a splash guard;
- in the third cited type, the all aluminium barrs C shaped as currently available on the market have thickness inadequate to assure the required mechanical resistance so that, as far as the applicant knows, these barrs did not yet get approval.

The bumper according to this present invention obviates said drawbacks and is characterized in the claims. According to the cross section, this bumper barr has a whole outline substantially C shaped which, considering the barr mounted on the vehicle, shows the two flanges of the C outline conveniently spaced one from the other and horizontally positioned along the rear part of the vehicle and shows vertical the web of the C outline connected with the two said flanges; the bumber barr is so defined by at least three single parts assembled together : two opposite flanges of the C outline and a web which connects said flanges. At the upper and lower ends the web bears bent extensions suitable to engage around said flanges, while engagement elements which correspond on the flanges and on the web assure the permanent connection of said three parts. The web may be realized in two or more sections, paticularly in vertically superposed sections lying in the same vertical plane with the common edges fastened one to the other possibly.

Preferably, the two flanges of the C outline and the web are made of light material like drawn aluminium and extruded or pressed plastic, in particular, the flanges in drawn aluminium and the web in extruded plastic reinforced by fiber glass.

The advantages of this bumper are in its weight which is lower than in the majority of the known types, lower weight due to the use of drawn or extruded or pressed elements, as for instance drawn aluminium and extruded plastic material or drawn aluminium only or extruded plastic material only; the advantages are also in the fact that said elements may be produced in the factory in industrial lengths in notable quantities and then stocked, at producer's choice who will just cut the elements according to the length of each type of barr as scheduled for a certain production; advantages are also in the fact that, after cutting each piece by operations and machines simultaneously making the necessary cuts and driling, the elements are assembled easily and rapidly in order to compose the finished bumper barr which comprises, in a known way, caps or plugs for covering the barr ends.

The invention will be illustrated in detail by examples of enbodiments and with the support of diagrammatic drawings wherein
- Fig. 1 is a first cross section,
- Fig. 2 is a perspective view,
- Fig.3 is a second cross section,
- Fig. 4 is a side view partly sectioned and
- Fig. 5 is a third cross section.

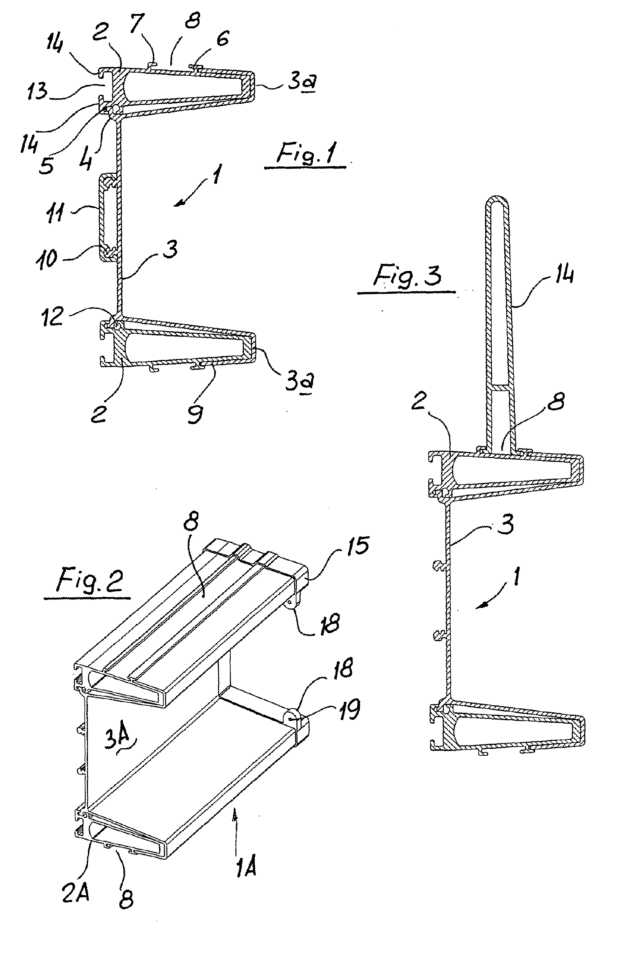

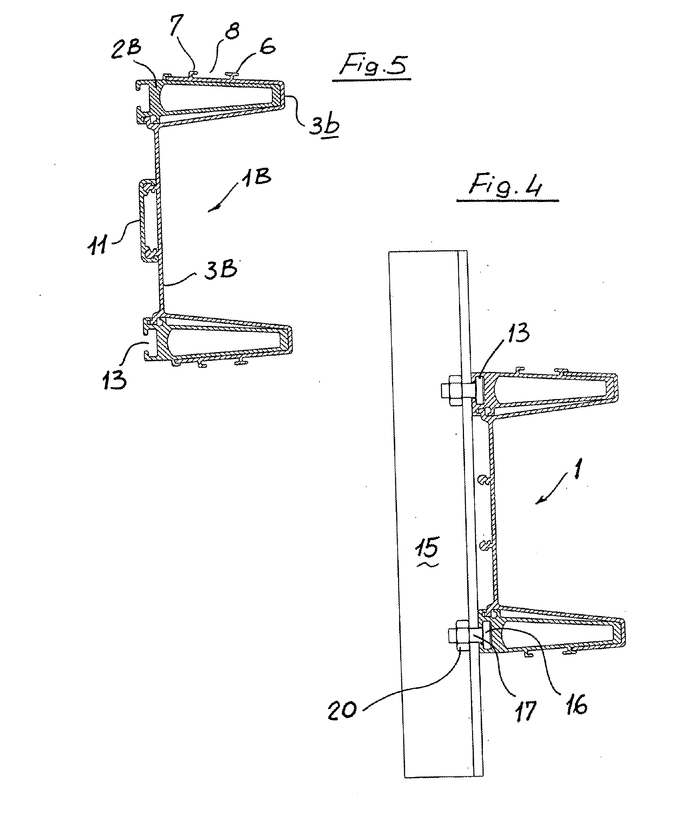

Fig. 1 shows a bumper 1 composed by three single elements: two identical flanges of said C outline in the form of hollow sections of drawn aluminium 2, parallel and spaced one from the other, and a web 3 of extruded plastic reinforced by fiber glass also in the C outline wherein each of the front ends of the C shape is a bent extention 3a which leans against the corresponding end of the hollow alluminium section. In the web 3 the engagement elements are longitudinal overhanging liners 4 that engage in corresponding engagement elements for the flanges in the form of longitudinal guides 5. Also the ends 9 of web 3 work as engagement elements in the form of liners that engage into the engagement elements in the form of a longitudinal recess made in the T shaped element 6 made in the upper wall of section 2; element 6 together with element 7 in the form of reversed L define a longitudinal guide 8 wherein an elevation may be mounted, as it is shown in Fig. 3. The longitudinal guide 8 is made also on the lower section 2 since such sections are identically designed for standardizing the fabrication and since the longitudinal lower guide 8 serves for applying a known splash guard not shown in the figure. The web 3 bears on the back two overhanging elements 10 to define a longitudinal median guide wherein an element 11 made of extruded plastic is forced for increasing the resistance to bending of the web itself, but principally for defining a covered raceway receiving the wires of the lights which will be preferably mounted into the barr, along one or more portions of the web 3 comprised between the sections 2, upper and lower ones. A substantially circular longitudinal way 12 is defined in the areas where the vertical ends of the web 3 engage with the aluminium flanges 2; after assembling the aluminium parts 2 with the plastic part 3 at the two opposite ends of said way 12, two pins (not shown) are forced into the way that make integral said parts and prevent them from possible relative sliding which might occur in spite of the already described engagement means and the provision of end plugs in the bumpers as shown in Fig. 2. Each one of sections 2 bears on the back a longitudinal guide 13 defined between the two overhanging parallel elements 14 whose purpose is to permit the sliding and correct positioning of steel elements, shown only in Fig. 4, for attaching directly or undirectly to vehicle fix elements, so that the whole barr be correctly fastened in the desired position.

Fig. 2 is a perspective view of a bumper 1A similar with the barr illustrated in Fig. 1, but wherein the two flanges 2A and the web 3A are of drawn aluminium. The figure shows the two guides 8 and a "plug" 15 made of plastic which closes one end of the barr, while the plug is not shown at the other end of the barr in order to let visible the sections of the parts 2A and 3A; each plug 15 bears two front extensions 18, up and down, that present holes 19 wherein ends of a light protection grate may engage, the grate being not shown, while at least another opposite grate extension is fixed to the wall of the web 3A.

Fig.3 shows that the bumper 1 illustrated in Fig.1 is provided with an elevation element 14 made of plastic, forced into the longitudinal guide 8. Of the remaining parts in the figure, only the main parts 1, 2 and 3 have a numeral corresoponding to the same ones used in Fig. 1. The elevation element 14 is an optional element which serves, as it is known, for mounting reflex reflectors, speed limit signals and other permitted signs desired by the user,

Fig. 4 shows a bumper 1 fixed to two barrs 15 (one only is visible) in turn fixed vertically to the rear part of a vehicle; in the guides 13 of the bumper, steel elements 16 are inserted which have threaded studs 17 welded thereto and passing through holes provided in the barrs 15 so that, by a nut 20, the bumper 1 may be fastened to the barrs 15.

Fig.5 shows a bumper 1B wherein the bent extensions 3b of the web 3B extend upto covering the majority of the outer walls of the two opposite aluminium hollow sections 2B; the longitudinal guides 8 for the mounting of the elevation element 14 are provided on the bent extensions 3b. The other reference numbers are the same used in the Fig. 1 for referring to the corresponding parts.

## Claims

1. Bumper for industrial or commercial vehicle and their trailer defined by a transversal outline of substantially C shape in its whole and suitable to be mounted horizontally along the rear part of the vehicle or trailer **characterized in that** it is defined by at least three single elements assembled together as two opposite independent flanges (2) and a web (3), all together forming said C shape, the web connecting said flanges and bearing at the upper and lower ends bent extensions (3a) suitable to engage around said flanges (2) and elements (6, 9) corresponding on the flanges (2) and on the web (3) angaging one with the other for improving the connection of said three elements.

2. Bumper according to claim 1 **characterized in that** the two opposite independent flanges (29) are of drawn aluminium and the web (3) in plastic or plastic reinforced by fiber glass.

3. Bumper according to claim 1 **characterized in that** the two opposite independent flanges (2A) and the web (3A) are of plastic or plastic reinforced by fiber glass.

4. Bumper according to claim 1 **characterized in that** the two opposite independent flanges (2A) and the web (3A) are of drawn aluminium.

5. Bumper according to claims 1 - 4 **characterized in that** each of the areas in which the vertical ends of web (3) are engaged with the opposite independent flanges (2) defines a longitudinal way (12) into the ends of which pins are forced that improve the connection between said flanges and web.

6. Bumper according to claims 1 - 5 **characterized in that** the upper and lower walls of the C shaped flanges (2) comprise engagement means (8) for mounting respectively an elevation element (14) and a splash guard.

7. Bumper according to claims 1 - 6 **characterized in that** the bent extensions (3b) of the web (3B) extend to cover the outer walls of the two opposite independent flanges (2B), longitudinal guides (8) for mounting the elevation element (14) and the splash guard being made on the bent extensions (3b).

8. Bumper according to preceeding claims **characterized in that** two plugs (15) are comprised each of which closes a side end of the bumper and bears two front extensions (18), up and down, wherein holes (19) are provided suitable to engage a front warning ligth protection grate.
